# FASCICULE DE BREVET EUROPEEN

(11) **EP 4 072 976 B1**
(45) Date de publication et mention de la délivrance du brevet: **09.04.2025**
(21) Numéro de dépôt: 20820967.6
(22) Date de dépôt: 11.12.2020
(51) Int. Cl.: B65G 21/00, B65G 21/06

(54) **SYSTÈME DE CONVOYAGE**
FÖRDERSYSTEM
CONVEYING SYSTEM

(30) Priorité: 11.12.2019 FR 1914147
(43) Date de publication de la demande: 19.10.2022
(73) Titulaire: Fives Intralogistics SAS, 38670 Chasse-sur-Rhone (FR)
(72) Inventeur: TOURON, Bruno, 69520 GRIGNY (FR)
(74) Mandataire: Novagraaf Group
(86) Numéro de dépôt international: PCT/EP2020/085721
(87) Numéro de publication internationale: WO 2021/116383

(56) Documents cités:
- WO-A1-2017/072736
- DE-A1- 19 946 452
- US-A1- 2013 199 900

## Description

### Domaine technique de l'invention

L'invention concerne le domaine de la logistique dans lequel des articles, tels que des colis, sont transportés par un système de convoyage, d'un point d'entrée vers un point de sortie.

Un tel système peut par exemple s'appliquer à une station de tri.

### Etat de la technique

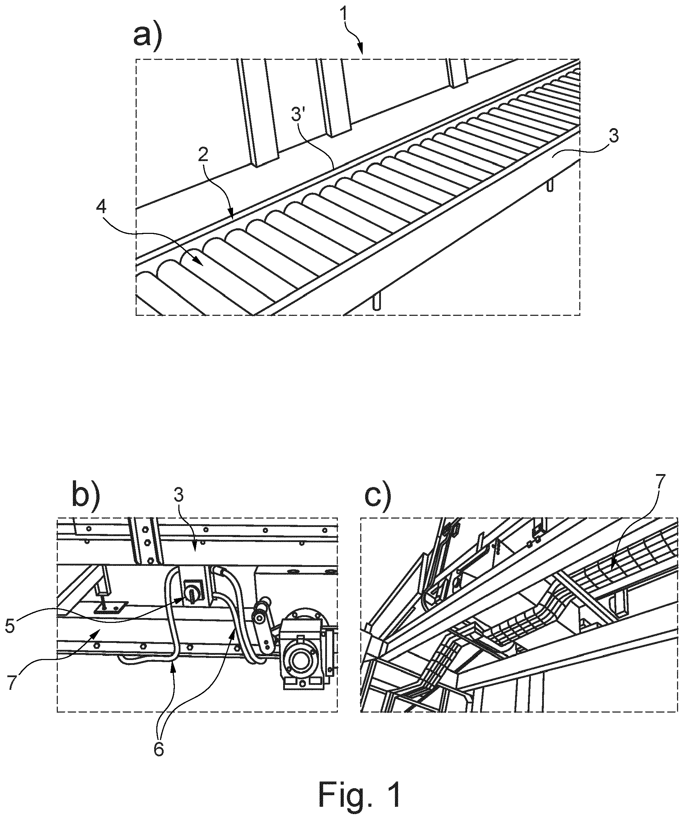

La figure 1 représente en vue a) un système de convoyage 1 connu de l'état de la technique. Le convoyeur 1 comprend un châssis 2 ayant deux longerons 3, 3' parallèles (communément appelés des membrures) et des moyens 4, de convoyage, agencés entre ces deux longerons 3, 3'. Dans cet exemple, les moyens 4 de convoyage sont des rouleaux qui peuvent être libres ou motorisés. Dans d'autres exemples, les moyens de convoyage peuvent comprendre une ou plusieurs bandes de transport. La vue b) est un zoom sur le convoyeur 1 tel qu'il peut être vu d'un côté. Sur cette vue, il peut être constaté qu'un ensemble de câbles 6 avec leurs gaines de protection ainsi que des boutons 5 de commandes du convoyeur 1, sont présents sous le longeron 3. Par ailleurs, comme cela est visible sur les vue b) et c), un ensemble de support 7 est nécessaire pour permettre l'acheminement et le support des câbles d'alimentation 6.

Ce système de convoyage connu présente donc des chemins de câbles électriques, en particulier sous le convoyeur. Ces chemins comprennent des plaques de support, des attaches et d'autres moyens de fixation pour diriger, supporter et sécuriser les câbles d'alimentation ou de contrôle. Ils comprennent aussi, des gaines suspendues pour transporter des câbles électriques jusqu'aux boitiers de commande en passant par les pieds des convoyeurs. Par ailleurs, les boitiers de commande sont positionnés à des endroits où ils ne sont pas immédiatement accessibles par les opérateurs.

Cela résulte donc en plusieurs inconvénient, parmi lesquels :
- un encombrement sous les convoyeurs et sur les côtés où les gaines sont suspendues.
- une sécurité non optimale de l'installation vue l'accessibilité aux opérateurs des câbles transportées dans les gaines suspendues
- une complexité qui rend le temps de travail nécessaire à l'installation du système très long,
- des coûts d'installation importants engendrés par la nécessité de divers supports, la visserie, les gaines de protection et autres moyens de fixation.
- une esthétique non convenable.

On connait le document DE19946452 A1 qui présente un système en partie amélioré, mais qui ne donne pas complètement satisfaction.

En particulier ce document divulgue un système de convoyage selon le préambule de la revendication 1.

L'invention a donc pour objectif de proposer un système de convoyage qui permette de résoudre les problèmes mentionnés ci-dessus en totalité ou en partie.

### Résumé de l'invention

A cet effet, l'invention porte sur un système de convoyage comprenant un châssis qui présente deux longerons, par exemple parallèles, et un moyen de convoyage de charges agencé entre les deux longerons, au moins un longeron a une forme de profilé de section sensiblement en C présentant une ouverture vers l'extérieur par rapport aux moyens de convoyage.

Selon l'invention, ledit longeron est agencé pour porter dans le profilé, sur tout ou partie de sa longueur, des câbles électriques destinées à l'alimentation et/ou au contrôle dudit système de convoyage.

Le fait de passer les câbles électriques dans les membrures permet de simplifier le système de convoyage et de réduire son encombrement. En effet, il devient possible de supprimer les supports externes et les protections des câbles ainsi que leurs attaches.

Ceci permet aussi de renforcer la sécurité du système en supprimant les gaines suspendues, ce qui améliore aussi l'esthétique.

En outre, en réduisant la complexité du système et le nombre de pièces et moyens de fixation, le temps de travail nécessaire à l'installation du système ainsi que les coûts sont réduits.

Par ailleurs, les longerons du système de convoyage peuvent avantageusement servir à cheminer de manière intégrée et sécurisée d'autres câbles (autres que les câbles d'alimentation ou de contrôle du convoyeur) d'un point à l'autre de l'installation où le système de convoyage des installé. Ceci permet donc de réduire l'encombrement de l'installation.

Selon l'invention, le longeron présente des premiers moyens de fixation et le système comprend en outre au moins un boitier de commande ou un accessoire de contrôle relié aux câbles électriques et accessibles de l'extérieur à un opérateur, par exemple pour lancer ou arrêter le convoyeur, effectuer des réglages, ou encor pour manipuler l'accessoire de contrôle en vue d'assurer une détection ou mesure. Ledit boitier et/ou ledit accessoire présente un corps et des deuxièmes moyens de fixation agencées pour coopérer avec lesdits premiers moyens de fixation par encliquetage.

Ceci présente l'avantage que les éléments de commande sont plus visibles et plus accessibles pour les opérateurs et donc d'augmenter l'ergonomie du système. En outre, la fixation par encliquetage permet de faciliter l'installation des boitiers de commande et des accessoires et de réduire le temps d'installation. Cela permet aussi de réduire la visserie habituellement utilisée pour l'installation de tels boitiers de commande ou accessoires.

Un accessoire peut être un moyen de mesure, de détection ou d'affichage. Par exemple, le système peut comprendre un accessoire d'affichage pour faire à l'opérateur un retour pour donner suite à une commande de l'opérateur. L'accessoire, peut être selon un autre exemple sous forme d'un panneau tactile qui peut servir à programmer le fonctionnement du convoyeur ou à programmer un diagnostic et afficher un résultat. Le système selon l'invention permet donc d'avoir une interface homme machine ergonomique comprenant des moyens de de commande et/ou des moyens d'affichage.

Selon l'invention, les premiers moyens de fixation comprennent le long du profilé une mâchoire supérieure et une mâchoire inférieure correspondant respectivement à l'extrémité supérieure et à l'extrémité inférieure du profilé, lesdites mâchoires étant sensiblement alignées, et chaque deuxième moyen de fixation coopère avec l'une desdites mâchoires.

De tels premiers moyens de fixation sont de construction simplifiée et permettent une fixation d'un nombre important de boitiers de commande ou d'accessoires le long du longeron. Ceci permet aussi d'ajouter ou de retirer de manière modulaire autant d'accessoires ou de boutons de commande que nécessaire.

Avantageusement, lesdites mâchoires peuvent former par rapport à un axe vertical perpendiculaire au sol, un angle supérieur à 0° et inférieur 90°.

Ceci permet de faciliter l'accessibilité des boutons de commande aux opérateurs.

Selon l'invention, ledit corps peut présenter une section globalement rectangulaire et les deuxièmes moyens de fixation comprennent deux encoches ou deux crochets diagonalement opposés par rapport audit corps. Avantageusement, les deuxièmes moyens de fixation sont constitués de seulement deux encoches ou deux crochets diagonalement opposés. Bien évidemment, les encoches ou crochet peuvent être remplacés par tout moyen de fixation similaire connu de l'homme du métier.

Cet agencement permet selon l'invention de réaliser une fixation simplifiée par encliquetage par une simple rotation d'un quart de tour. Avantageusement, ledit corps du boitier de commande ou de l'accessoire, présente une longueur sensiblement égale à la distance entre la mâchoire inférieure et la mâchoire supérieure du profilé, et une largeur inférieure ou égale N fois sa longueur, avec N situé entre 1 et 10, par exemple.

N est choisi de sort à permettre :
- un montage et un retrait facile, par simple rotation d'un quart de tour ;
- une solidité de la fixation dans le temps ;
- une réduction de l'encombrement.

Avantageusement, la largeur est inférieure au double de la longueur. Avantageusement, la largeur du corps est inférieure ou égale à sa longueur.

Avantageusement, le système peut comprendre également des plaques qui sont destinées à servir de caches dans les zones qui ne comprennent pas de boutons ou d'accessoires. Cela permettra d'assurer la sécurité des opérateurs en évitant qu'ils ne touchent les câbles et de protéger le convoyeur de la poussière.

Avantageusement, le système de convoyage peut en outre comprendre un ou plusieurs tubes reliant les deux longerons et agencés pour permettre un passage de câbles d'un longeron à l'autre.

Ceci permet un passage sécurisé de câbles électriques d'un longeron à l'autre et permet également de renforcer la structure du châssis.

Avantageusement, le châssis comprend une paroi inférieure reliant les deux longerons. Cette paroi inférieure permet de supporter des câbles d'alimentation et les câbles de contrôle. Elle permet aussi de soutenir la structure du châssis.

Avantageusement, ladite paroi inférieure peut comprendre une partie amovible. Cette partie amovible permet d'accéder facilement à l'intérieure du châssis, pat exemple pour réaliser une réparation ou une opération de maintenance.

En plus des avantages mentionnés ci-dessus, le système de convoyage selon l'invention permet aussi de faire une économie sur la longueur des câbles, en réduisant les différents chemins des câbles.

### Brève description des figures

D'autres caractéristiques et avantages de l'invention apparaitront à la lecture de la description détaillée qui va suivre d'exemples de réalisation en référence aux dessins annexés dans lesquels :
[Fig 1] la figure 1 est une vue schématique d'un exemple de système de convoyage connu de l'état de la technique ;
[Fig 2] la figure 2 est une vue schématique partielle d'un exemple de système conforme à l'invention ;
[Fig 3] la figure 3 illustre en a) une section du longeron de la figure 2, et en b) un exemple de boitier de commande destiné à être monté sur le longeron de la figure 2 ;
[Fig 4] la figure 4 est une vue schématique d'un deuxième exemple de système de convoyage selon l'invention ;
[Fig 5] la figure 5 est une vue schématique d'un troisième exemple de système de convoyage selon l'invention.

### Description détaillée de l'invention

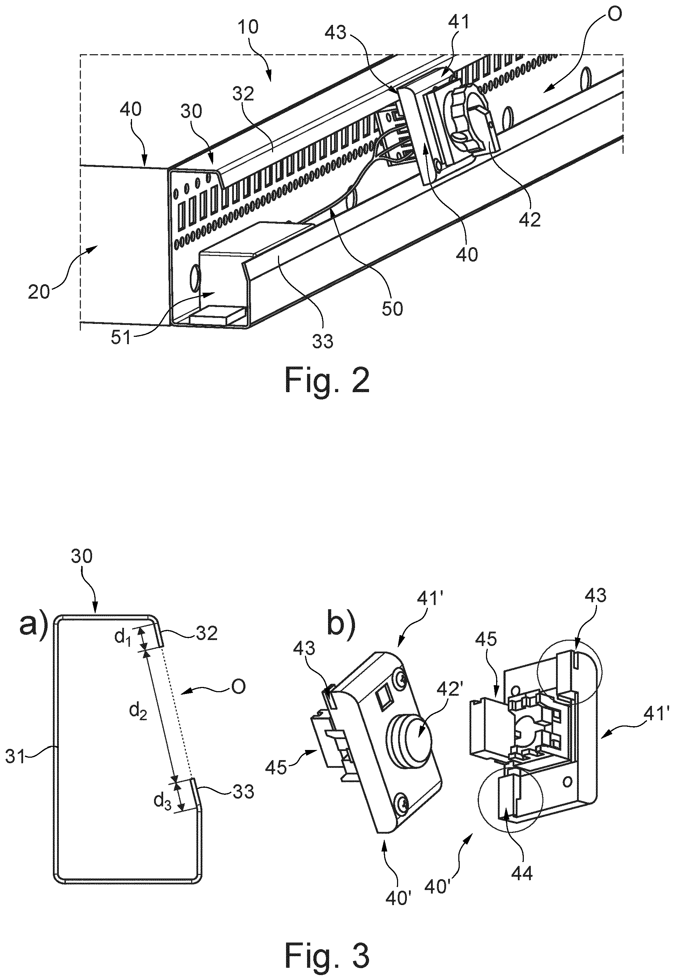

La figure 2 est une vue schématique partielle d'un système de convoyage 10 conforme à l'invention. Le système de convoyage 10 comprend un châssis 20, représenté partiellement sur la figure 2 et un longeron 30, appelé également premier longeron dans ce qui suit. Le système comprend également un deuxième longeron non représenté. Le deuxième longeron peut être identique au premier longeron 10. Dans un autre exemple de réalisation, le premier et le deuxième longeron sont différents.

Le système de convoyage comprend également un moyen de convoyage de charges 40 sous forme d'une bande agencée entre les deux longerons.

Le longeron 30 a une forme de profilé de section sensiblement en C et présente une ouverture O vers l'extérieur par rapport à la bande de transport de charge 20.

Comme cela se voit sur la figure 2, le longeron 30 porte dans le profilé des câbles 50 électriques qui servent à l'alimentation et/ou au contrôle dudit system de convoyage 10. Le profilé peut également porter d'autres éléments 51 du système d'alimentation ou du système de contrôle.

La paroi 31 du profilé du longeron 30 présente une mâchoire supérieure 32 et une mâchoire inférieure 33. Ces deux mâchoires 32, 33 forment des premiers moyens de fixation.

Sur la figure 2, on voit également, fixé sur le profilé, un exemple de boitier de commande 40 qui comprend un corps 41 et un bouton de commande 42.

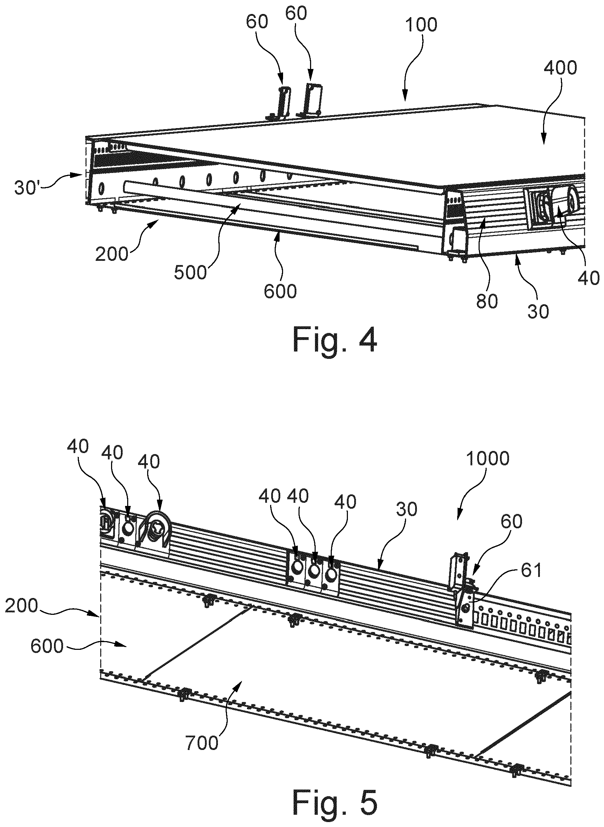

D'autre types d'éléments peuvent aussi se fixer au profilé, par exemple des accessoires 60 visible sur la figure 4 ou des plaques 80 pour obturer les zones ouvertes qui ne comprennent ni boitier de commande ni accessoire. Cela permet d'assurer la sécurité des opérateurs en évitant qu'ils ne touchent les câbles 50. Cela permet également de protéger l'intérieur du profilé et les câbles contre les poussières.

La figure 3 a) montre une coupe transversale du premier longeron 30, selon un exemple de réalisation non limitatif de l'invention.

Dans cet exemple, les mâchoires supérieure 32 et inférieure 33 sont alignées et forment un angle d'environ 13° par rapport à un axe vertical perpendiculaire au sol.

Dans d'autres exemples de réalisation, les deux mâchoires peuvent ne pas être alignées et peuvent former un angle diffèrent de 13°, par exemple un angle supérieur 0° et inférieur 90°. Un tel angle est choisi de sorte à permettre une meilleure présentation des boutons de commande à l'opérateur.

La figure 3 b) un deuxième exemple de boitier 40' de commande destiné à être monté sur le longeron de la figure 2. Le boitier 40' est présenté en perspective avec la face avant (vue de gauche) et avec la face arrière (vue de droite).

Le boitier présente un corps 41' sensiblement rectangulaire et des deuxièmes moyens 43, 44 de fixation qui sont agencées pour coopérer avec les mâchoires 32, 33 du profilé 30 par encliquetage. Pour permettre une telle fixation par encliquetage, les deuxièmes moyens de fixation 43, 44 comprennent deux encoches ou deux crochets diagonalement opposés par rapport audit corps 41'. Dans d'autres exemples de réalisation non illustrés, les premiers moyens de fixation et les deuxièmes moyens de fixation sont de forme différente de celle représentés pas les figures.

Par ailleurs, le boitier comprend une fiche 45 permettant son branchement aux câbles électriques 50, montrés en figure 2. Il comprend également un bouton 42' de commande.

La figure 4 représente schématiquement un deuxième exemple de système 100 de convoyage selon l'invention. Le système 100 est similaire au système décrit précédemment. Il comprend un châssis 200, présentant deux longerons 30, 30' et une bande de transport de charge 400.

Le système de convoyage 100 peut comprendre également un ou plusieurs tubes 500 reliant les deux longerons 30, 30'. Ces tubes permettent un passage de câbles électriques 50 d'un longeron 30, 30' à l'autre.

Le châssis 200 peut aussi comprendre une paroi inférieure 600 reliant les deux longerons 30, 30'. Cette paroi inférieure 600 permet de renforcer la structure du châssis.

Selon une variante d'utilisation, cette paroi inférieure peut également supporter une partie des câbles d'alimentation et/ou des câbles de contrôle. Par exemple, les câbles principaux d'alimentation et/ou de contrôle du convoyeur peuvent être transportés le long du convoyeur dans le châssis et supportés par la paroi inférieure 600. Des câbles secondaires comme les câbles 50 visibles en figure 2 sont tirés des câbles principaux et reliés au boitiers 40 de commandes ou aux accessoires 60.

En outre, les câbles 50 peuvent traverser d'un longeron 30 à l'autre 30' via les tubes 500, par exemple pour relier un boitier de commande 40 à un accessoire 60.

La figure 5 représente une vue schématique d'un autre exemple de système de convoyage 1000 dont la structure est similaire à celle du système 100 de la figure 4. Le système de convoyage 1000 comprend en outre une partie amovible 700 dans sa paroi inférieure 600. La partie amovible 700 permet d'accéder facilement à l'intérieure du châssis pour réaliser une réparation ou une opération de maintenance.

## Revendications

1. Système de convoyage (10 ; 100 ; 1000) comprenant un châssis (20 ; 200) présentant deux longerons (30, 30') et un moyen (40 ; 400) de convoyage de charges agencé entre les deux longerons (30, 30'), au moins un longeron (30) a une forme de profilé de section sensiblement en C présentant une ouverture vers l'extérieur par rapport au moyens (40 ; 400) de convoyage de charges, ledit longeron (30) étant agencé pour porter dans le profilé, sur tout ou partie de sa longueur, des câbles (50) électriques destinées à l'alimentation et/ou au contrôle dudit système de convoyage (10 ; 100 ; 1000), le longeron (30) présentant des premiers moyens (32, 33) de fixation et le système comprend en outre au moins un boitier (40, 40') de commande et/ou un accessoire (60) de contrôle, reliés aux câbles électriques (50) et accessibles de l'extérieur à un opérateur, ledit boitier et/ou ledit accessoire présentant chacun un corps (41, 61) et des deuxièmes moyens (43, 44) de fixation agencés pour coopérer avec lesdits premiers moyens (32, 33) de fixation par encliquetage,
dans lequel :
- les premiers moyens (32, 33) de fixation comprennent le long du profilé une mâchoire supérieure (32) et une mâchoire inférieure (33) correspondant respectivement à l'extrémité supérieure et à l'extrémité inférieure du profilé, lesdites mâchoires étant sensiblement alignées, et
- chaque deuxième moyen (43, 44) de fixation coopère avec l'une desdites mâchoires (32, 33),
**caractérisé en ce que** ledit corps (41, 61) présente une section globalement rectangulaire, les deuxièmes moyens de fixation (43, 44) sont constitués de deux encoches ou de deux crochets diagonalement opposés par rapport audit corps (41, 61) et configuré pour réaliser une fixation par encliquetage par une simple rotation d'un quart de tour.

2. Système de convoyage (10 ; 100 ; 1000) selon la revendication précédente, dans lequel lesdites mâchoires forment un angle supérieur à 0° et inférieur 90°par rapport à un axe vertical par rapport au sol.

3. Système de convoyage (10 ; 100 ; 1000) selon l'une des revendications précédentes, dans lequel ledit corps (41, 61) présente une longueur sensiblement égale à la distance entre la mâchoire inférieure et la mâchoire supérieure du profilé, et une largeur inférieure ou égale au double de sa longueur.

4. Système de convoyage (10 ; 100 ; 1000) selon la revendication précédente, dans lequel la largeur du corps est inférieure ou égale à sa longueur.

5. Système de convoyage (100) selon l'une des revendications précédentes, comprenant en outre un ou plusieurs tubes (500) reliant les deux longerons (30, 30') et agencés pour permettre un passage de câbles d'un longeron à l'autre.

6. Système de convoyage (1000) selon l'une des revendications précédentes, dans lequel le châssis (200) comprend une paroi inférieure (600) reliant les deux longerons (30, 30').

7. Système de convoyage (1000) selon la revendication précédente, dans lequel ladite paroi inférieure (200) comprend une partie amovible (700).

## Patentansprüche

1. Fördersystem (10; 100; 1000), umfassend ein Gestell (20; 200), das zwei Längsträger (30, 30') aufweist, und ein Lastenfördermittel (40; 400), das zwischen den zwei Längsträgern (30, 30') angeordnet ist, wobei mindestens ein Längsträger (30) eine im Wesentlichen C-förmige Querschnittsprofilform vorweist, die eine Öffnung nach außen hin relativ zu den Lastenfördermitteln (40; 400) aufweist, wobei der Längsträger (30) zum Tragen in dem Profil über die gesamte oder einen Teil seiner Länge von elektrischen Kabeln (50) angeordnet ist, die für die Versorgung und/oder die Steuerung des Fördersystems (10; 100; 1000) vorgesehen sind, wobei der Längsträger (30) erste Befestigungsmittel (32, 33) aufweist und das System ferner mindestens ein Gehäuse (40, 40') einer Steuerung und/oder ein Steuerzubehör (60), das mit den elektrischen Kabeln (50) verbunden und von außen für einen Bediener zugänglich ist, umfasst, wobei das Gehäuse und/oder das Zubehör jeweils einen Körper (41, 61) und zweite Befestigungsmittel (43, 44) aufweist, die zum Zusammenwirken mit den ersten Befestigungsmitteln (32, 33) durch Einklinken angeordnet sind,
wobei:
- die ersten Befestigungsmittel (32, 33) entlang des Profils eine obere Backe (32) und eine untere Backe (33) umfassen, die jeweils dem oberen Ende und dem unteren Ende des Profils entsprechen, wobei die Backen im Wesentlichen ausgerichtet sind, und
- jedes zweite Befestigungsmittel (43, 44) mit einer der Backen (32, 33) zusammenwirkt,
**dadurch gekennzeichnet, dass** der Körper (41, 61) einen im Allgemeinen rechteckigen Querschnitt aufweist, die zweiten Befestigungsmittel (43, 44) aus zwei Kerben oder zwei Haken bestehen, die diagonal gegenüber relativ zu dem Körper (41, 61) sind und zum Verwirklichen einer Befestigung durch Einklinken durch eine einfache Vierteldrehung konfiguriert sind.

2. Fördersystem (10; 100; 1000) nach dem vorstehenden Anspruch, wobei die Backen einen Winkel größer als 0° und kleiner als 90° relativ zu einer vertikalen Achse relativ zu dem Boden ausbilden.

3. Fördersystem (10; 100; 1000) nach einem der vorstehenden Ansprüche, wobei der Körper (41, 61) eine Länge, die im Wesentlichen gleich dem Abstand zwischen der unteren Backe und der oberen Backe des Profils ist, und eine Breite aufweist, die kleiner als oder gleich dem Doppelten seiner Länge ist.

4. Fördersystem (10; 100; 1000) nach dem vorstehenden Anspruch, wobei die Breite des Körpers kleiner als oder gleich seiner Länge ist.

5. Fördersystem (100) nach einem der vorstehenden Ansprüche, ferner umfassend ein oder mehrere Rohre (500), die die zwei Längsträger (30, 30') verbinden und zum Ermöglichen eines Durchgangs der Kabel von einem Längsträger zu dem anderen angeordnet sind.

6. Fördersystem (1000) nach einem der vorstehenden Ansprüche, wobei das Gestell (200) eine untere Wand (600) umfasst, die die zwei Längsträger (30, 30') verbindet.

7. Fördersystem (1000) nach dem vorstehenden Anspruch, wobei die untere Wand (200) einen abnehmbaren Teil (700) umfasst.

## Claims

1. Conveying system (10; 100; 1000) comprising a frame (20; 200) having two longitudinal members (30, 30') and a load-conveying means (40; 400) arranged between the two longitudinal members (30, 30'), at least one longitudinal member (30) has a profile shape having a substantially C-shaped cross-section having an opening towards the outside with respect to the load-conveying means (40; 400), said longitudinal member (30) being arranged to carry, in the profile, over all or part of its length, electrical cables (50) for powering and/or controlling said conveying system (10; 100; 1000), the longitudinal member (30) having first fastening means (32, 33) and the system further comprising at least one control box (40, 40') and/or control accessory (60), connected to the electrical cables (50) and accessible to an operator from the outside, said box and/or accessory each having a body (41, 61) and second fastening means (43, 44) arranged to cooperate with said first fastening means (32, 33) by snap-fitting,
wherein:
- the first fastening means (32, 33) comprise, along the profile, an upper jaw (32) and a lower jaw (33) corresponding respectively to the upper end and the lower end of the profile, said jaws being substantially aligned, and
- each second fastening means (43, 44) cooperates with one of said jaws (32, 33),
**characterized in that** said body (41, 61) has a generally rectangular cross-section, the second fastening means (43, 44) consist of two notches or two hooks which are diagonally opposed with respect to said body (41, 61) and configured to achieve snap-fit fastening by a simple quarter-turn rotation.

2. Conveying system (10; 100; 1000) according to the preceding claim, wherein said jaws form an angle greater than 0° and less than 90° relative to a vertical axis with respect to the ground.

3. Conveying system (10; 100; 1000) according to any of the preceding claims, wherein said body (41, 61) has a length substantially equal to the distance between the lower jaw and the upper jaw of the profile, and a width less than or equal to twice its length.

4. Conveying system (10; 100; 1000) according to the preceding claim, wherein the width of the body is less than or equal to its length.

5. Conveying system (100) according to any of the preceding claims, further comprising one or more tubes (500) which connect the two longitudinal members (30, 30') and are arranged to allow cables to pass from one longitudinal member to the other.

6. Conveying system (1000) according to any of the preceding claims, wherein the frame (200) comprises a lower wall (600) connecting the two longitudinal members (30, 30').

7. Conveying system (1000) according to the preceding claim, wherein said lower wall (200) comprises a removable part (700).
